# EUROPEAN PATENT SPECIFICATION

(11) **EP 4 418 703 B1**
(45) Date of publication and mention of the grant of the patent: **01.04.2026**
(21) Application number: 24158310.3
(22) Date of filing: 19.02.2024
(51) Int. Cl.: H04W 4/46, H04W 4/12, H04W 4/02

(54) **VEHICLE-TO-VEHICLE MESSAGING**
FAHRZEUG-ZU-FAHRZEUG-NACHRICHTENÜBERMITTLUNG
MESSAGERIE DE VÉHICULE À VÉHICULE

(30) Priority: 19.02.2023 IL 30077723
(43) Date of publication of application: 21.08.2024
(73) Proprietor: Red Bend Ltd., 4501307 Hod Ha'Sharon (IL)
(72) Inventor: ARAD, Yair, 3056817 Binyamina (IL); DONI AKNIN, Tsoofit, 4428858 Kfar-Saba (IL); COHEN, Erez, 6940035 Tel-Aviv (IL)
(74) Representative: Kraus & Lederer PartGmbB

(56) References cited:
- WO-A1-2020/002267
- US-A1- 2015 312 353
- US-A1- 2023 048 886

## Description

### FIELD AND BACKGROUND

The present invention relates to communication between vehicles and, more particularly, but not exclusively to a method and system for vehicle-to-vehicle messaging.

Nowadays, a vehicle (say passenger car) driver would very often need to draw the intention of, and communicate with a driver of a vehicle that drives nearby.

The reasons for such communication may vary.

For example, a first driver may alert a second driver to a possible malfunction in the second driver's vehicle driving near the first driver's car, say on a flat tire, an open trunk, a door that is ajar, a smoking engine, etc.

In other examples, the first driver may wish to apologize for cutting the second driver off, to ask the second driver to dim his car's light off, to warn the second driver about something, to deliver a personal (say romantic) message to the second driver, etc.

Usually, the driver would draw the other person's attention with his car's horn, flash the car's headlights or wave with his hands.

Similarly, many drivers like to share experiences and thoughts with drivers of a similar vehicle model or a similar vehicle type. For example, a motorcycle driver may like to share experiences and thoughts (say about certain off-road tracks) with other motorcycle drivers, a driver of a car model that is new to the local market, may want to share her enthusiasm or disappointment with other drivers of the new model, etc.

In yet another example, one common way of selling a used car, is to put a handwritten or printed "for sale" note on one of the used car's windows, so another driver who sees the note, may call the seller's phone number which appears on the note. However, a driver who stops by the used car, say in front of a traffic light, may fail to write down or take a photograph of the note with his mobile phone, before the light changes from red to green.

In any event, such common ways of communication have limited effectiveness, and may also disturb and even risk other car drivers. Further, in some cultures, some of these inter-driver communication methods may be regarded as rude and/or are illegal. For example, in some countries, using your car's horn is allowed only for preventing an accident. WO 2020/002267 A1 discloses a vehicle-to-vehicle communication system. US 2023/048886 A1 discloses a transient virtual chatroom in which unknown drivers engage in conversation while driving.

### SUMMARY

According to one aspect of the present invention there is provided a method of vehicle-to-vehicle messaging as mentioned in claim 1.

According to a second aspect of the present invention there is provided a system for vehicle-to-vehicle messaging as mentioned in claim 11. The system is implemented on a server computer and comprises: a processing circuitry, and a memory in communication with the processing circuitry, the memory containing instructions that, when executed by the processing circuitry, cause the system to carry out the method of claim 1

Unless otherwise defined, all technical and scientific terms used herein have the same meaning as commonly understood by one of ordinary skill in the art to which this invention belongs. The materials, methods, and examples provided herein are illustrative only and not intended to be limiting.

Implementation of the method and system of the present invention involves performing or completing certain selected tasks or steps manually, automatically, or a combination thereof.

Moreover, according to actual instrumentation and equipment of preferred embodiments of the method and system of the present invention, several selected steps could be implemented by hardware or by software on any operating system of any firmware or a combination thereof.

For example, as hardware, selected steps of the invention could be implemented as a chip or a circuit. As software, selected steps of the invention could be implemented as a plurality of software instructions being executed by a computer using any suitable operating system. In any case, selected steps of the method and system of the invention could be described as being performed by a data processor, such as a computing platform for executing a plurality of instructions.

### BRIEF DESCRIPTION OF THE SEVERAL VIEWS OF THE DRAWINGS

The invention is herein described, by way of example only, with reference to the accompanying drawings. With specific reference now to the drawings in detail, it is stressed that the particulars shown are by way of example and for purposes of illustrative discussion of the preferred embodiments of the present invention only, and are presented in order to provide what is believed to be the most useful and readily understood description of the principles and conceptual aspects of the invention. The description taken with the drawings making apparent to those skilled in the art how the several forms of the invention may be embodied in practice.

In the drawings:
**Fig. 1** is a simplified block diagram schematically illustrating an exemplary system for vehicle-to-vehicle messaging, according to an exemplary embodiment of the present invention.
**Fig. 2** is a flowchart schematically illustrating a method of vehicle-to-vehicle messaging, according to an exemplary embodiment of the present invention.
**Fig. 3** is a simplified block diagram schematically illustrating an exemplary non-transitory computer readable medium having stored thereon, instructions for causing a processing circuitry to perform a process of vehicle-to-vehicle messaging, according to an exemplary embodiment of the present invention.
**Fig. 4** is a simplified block diagram schematically illustrating an exemplary Graphical User Interface, according to an exemplary embodiment of the present invention.

### DESCRIPTION OF THE SPECIFIC EMBODIMENTS

The present embodiments comprise a method and a system for vehicle-to-vehicle messaging.

As discussed in further detail hereinabove, nowadays, communication between vehicle drivers is limited to simple acts and gestures such as hand waving, using a vehicle's horn, flashing a car's headlights, placing a note on a car's window, etc.

Such ways of communication have limited effectiveness, and may disturb and even risk other vehicle drivers. Further, in some countries, such ways of communication are illegal and/or regarded as rude.

Exemplary embodiments of the present invention aim at improving the ways of communication between drivers, by establishing a messaging channel between computers of vehicles that have a detected spatiotemporal match, say between computers of two cars that drive in proximity to each other, in a highway (where gesture-based communication of the sort described hereinabove would be dangerous or illegal).

Optionally, the messaging channel is established in an asynchronous manner, say so as to allow the drivers of the two vehicles of the example, to communicate with each other when the vehicles no longer drive in the highways and are no long in proximity to each other, as described in further detail hereinbelow.

In an exemplary embodiment, there is received sensor data from a plurality vehicle computers of respective vehicles (say cars or motorcycles, etc.) when the vehicle is driven by their respective drivers.

Optionally, the data is received by a server computer, say a server computer used by a party that provides a service of connecting drivers during or after the presence of the drivers' vehicles in proximity and/or in a same region, as defined, say by programmer of the server computer, as described in further detail hereinbelow.

The sensor data may include, but is not limited to position data measured by a sensor of the vehicle and/or calculated by the vehicle's computer using GNSS (Global Navigation Satellite System) data such as GPS (Global Positioning System) or Galileo data, as described in further detail hereinbelow.

The sensor data may additionally or alternatively include dead reckoning data calculated by the vehicle's computer, say by extrapolating on a previously determined position, using speed, direction and elapsed time measurement, as described in further detail hereinbelow.

The sensor data may additionally or alternatively include image data captured by the vehicle's computer using one of the vehicle's cameras, say an image of a road sign that identifies a specific junction or town, an image of a vehicle that stops near the vehicle (say when the two vehicles stop in front of a traffic light), an image of a license plate of a vehicle that drives next to the vehicle, etc., as described in further detail hereinbelow.

The sensor data is collected, and used to detect a spatiotemporal match between two or more of the vehicle computers is detected.

Optionally, the detection of the spatiotemporal match is based on one or more criteria that are predefined, say by a programmer, as described in further detail hereinbelow.

The criteria may include, but are not limited to presence of the vehicles within a predefined distance from each other, presence of the vehicles within a predefined distance from a same junction, roundabout or other location, presence of the vehicles next to a same traffic light, etc., as described in further detail hereinbelow.

Optionally, the detection of the spatiotemporal match is based on sensor data received and collected over a short period of time (say a period of less than ten minutes), say a time period of a length predefined by a programmer or administrator of the server computer, such that the detection is made in real time or near real time, as described in further detail hereinbelow.

Optionally, the detection is based on a longer period of time (say a period of five hours), say a time period of a length predefined by a programmer or administrator of the server computer, as described in further detail hereinbelow.

Based on the detection, an attempt is made to establish a messaging channel between the vehicle computers that are found to have the detected spatiotemporal match, say by connecting the two using a messaging application installed on the two vehicle computers, by connecting the two in a phone call, etc., as described in further detail hereinbelow.

Thus, in a first example, two cars of a same new model stop side by side, next to each other, in front of a traffic light, at a road junction. The drivers of the two cars would like to talk and share information about their new cars. However, the light changes before the two can open their car windows and talk, and the drivers drive away from the junction.

With an exemplary embodiment of the present invention, shortly (say one minute) after the presence of the two vehicles, side by side, in front of that same traffic light, based on sensor data (say location data) that originates from the two vehicles, there is detected the two vehicles' computers spatiotemporal match.

Further in the example, shortly after the traffic light changes and the two vehicles drive away from the junction, each one of drivers presses a dedicated button, say a button of a GUI (Graphical User Interface) presented to the driver on his car's head unit. Upon the pressing of the button, the driver's vehicle computer sends a request message that indicates a request to establish a messaging channel, to the server computer, as described in further detail hereinbelow.

In the example, the button is a general request button that is used by the driver, to send a general request for establishing a messaging channel, as described in further detail hereinbelow.

However, in other examples, the button may rather be type-specific, say a button with which the driver sends a textual message such as "Wow, I must have your phone number!!" that is used both as a request of a romantic type, to establish a messaging channel, and as a first message to be communicated over the channel if established, as described in further detail hereinbelow.

In the first example, the request message represents a general request to establish a messaging channel, thus the driver need not select among channel request types, identify the reason for his request, identify the party (say vehicle or driver) that the driver wishes to connect with, etc.

That is to say, that the driver need not do anything but indicate the driver's presence in a situation in which the driver would like to communicate with a driver of another vehicle, using the general request message (say by clicking a general request button, on a GUI presented to the driver), even if not in real time or near real time of the situation's occurrence, as described in further detail hereinbelow.

Upon receipt of the request messages from both drivers and after the detection of the spatiotemporal match between the two vehicles, an attempt is made to establish a messaging channel between the vehicle computers of the two vehicles, say by connecting the vehicle computers of the two cars in a phone call, etc., as described in further detail hereinbelow.

Alternatively, in the example, the drivers do not push the button, and the attempt to establish the messaging channel is based on the detected spatiotemporal match, and includes a preliminary, separate communication between the server computer and each individual one of the two vehicle computers.

In each one of the separate communications, the driver is asked one or more questions, so as to confirm that the driver is interested in communicating with the driver of the other vehicle of the detected spatiotemporal match, is presented with information about the spatiotemporal match and/or other spatiotemporal matches of the driver's vehicle to choose from, etc., or any combination thereof, as described in further detail hereinbelow.

Upon a successful connection of the two cars, the two drivers can talk and share impressions and information about their new cars.

Thus, with exemplary embodiments of the present invention, common ways of communication between drivers of vehicles that are in proximity, which ways have limited effectiveness, and may also disturb and/or risk other drivers, are replaced with a communication channel that is established automatically between the drivers, even when vehicles are no longer in proximity.

On the other hand, the exemplary embodiments may prevent communication abuse, and unsolicited messages from strangers, say by restricting the communication to a predefined list of fixed messages, and to drivers that agree to communicate with each other, as described in further detail hereinbelow.

The principles and operation of a system and method according to the present invention may be better understood with reference to the drawings and accompanying description.

Before explaining at least one embodiment of the invention in detail, it is to be understood that the invention is not limited in its application to the details of construction and the arrangement of the components set forth in the following description or illustrated in the drawings.

The invention is capable of other embodiments or of being practiced or carried out in various ways. Also, it is to be understood that the phraseology and terminology employed herein is for the purpose of description and should not be regarded as limiting.

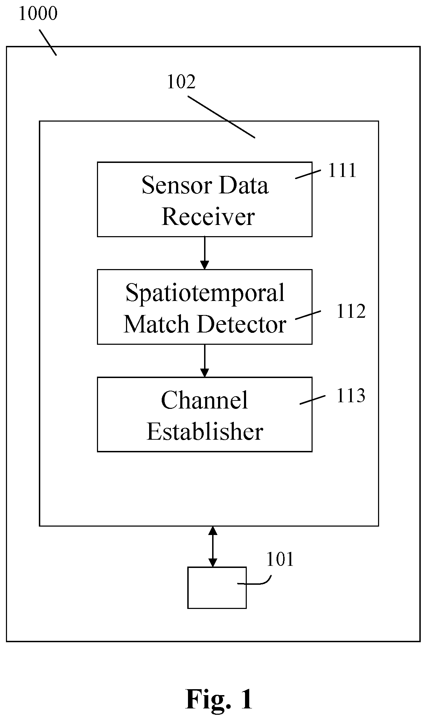

Reference is now made to **Fig. 1****,** which is a simplified block diagram schematically illustrating a first exemplary system for vehicle-to-vehicle messaging, according to an exemplary embodiment of the present invention.

A system 1000 for vehicle-to-vehicle messaging , according to an exemplary embodiment of the present invention, may be implemented using electric circuits, computer software, computer hardware, etc., or any combination thereof.

Optionally, the system 1000 is implemented on a computing device, say on a computer server of a party that provides a service that allows communication between drivers over a messaging channel, during or after the presence of the drivers' vehicles in proximity and/or in a same region, based on detection of the presence, as described in further detail hereinabove.

The computing device may be a single computer, a group of computers in communication over a network, a computing circuitry that includes one or more electric circuits, a computer processor, a computer memory, etc., or any combination thereof, as described in further detail hereinbelow.

Optionally, the system 1000 includes one or more electric circuits, say a circuit that includes one or more computer processor(s) 101 and at least one computer memory 102, say one or more circuits of a computer or circuits of two or more computers.

The computer memory 102 may include, but is not limited to: a Micro SD (Secure Digital) Card, a CD-ROM, a USB-Memory, a Hard Disk Drive (HDD), a Solid State Drive (SSD), a computer's ROM chip, an SRAM (Static Random Access Memory), a DRAM (Dynamic Random Access Memory) or other RAM (Random Access Memory) component, a cache memory component of a computer processor, etc., or any combination thereof, as known in the art.

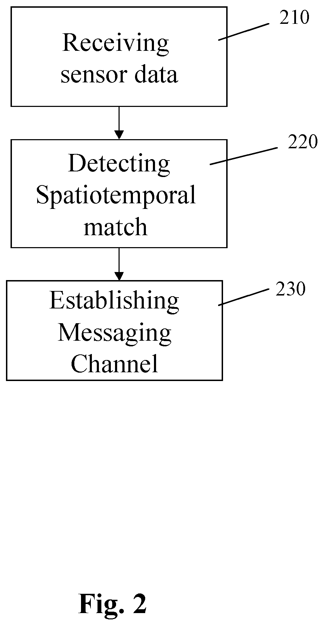

The at least one computer memory 102 stores instructions that are executable by the at least one computer processor 101, other parts of the circuitry, or both, for causing the system 1000 to perform the steps of the exemplary method described in further detail and illustrated using **Fig. 2** hereinbelow.

In one exemplary embodiment, the computer processor 101 is programmed to perform the instructions, and thereby to implement one or more additional parts (say modules) of the system 1000, say parts 111-113.

Optionally, one or more of the parts 111-113 is rather implemented as one or more electric circuits (say a logic circuit), or rather as combination of one or more electric circuits and the computer processor 101.

Each one of parts 111-113 may thus be implemented as software - say by programming the computer processor(s) 101 to execute at least a part of the exemplary method described in further detail hereinbelow, as hardware - say as one or more hardware part of the electric circuit(s) that execute(s) at least a part of the exemplary method, etc., or any combination thereof.

Accordingly, the system 1000 includes a sensor data receiver 111.

The sensor data receiver 111 receives and collects sensor data from two or more vehicle computers of respective two or more vehicles. The sensor data is received when the vehicles are driven by their respective drivers, as described in further detail hereinbelow.

The vehicle computers may include, for example, a computer of the vehicle's head unit, infotainment system and/or another computer installed in the vehicle, as described in further detail hereinbelow.

The sensor data that the sensor data receiver 111 receives from each one of the vehicles may include, but is not limited to position data measured by a sensor of the vehicle and/or calculated by the vehicle's computer using GNSS (Global Navigation Satellite System) data such as GPS (Global Positioning System) data or Galileo data, etc., as known in the art.

The received sensor data may additionally or alternatively, include dead reckoning data, image data captured by the vehicle's computer (say using one of the vehicle's cameras), etc., as described in further detail hereinbelow.

Optionally, the sensor data receiver 111 further derives location data from the received image data, say using an OCR (Optical Character Recognition) tool that extracts textual content from the received image data, and/or using other tools, as known in the art.

For example, the received sensor data may include an image of a road sign that identifies a specific junction or town, which image is used by the sensor data receiver 111, to derive the vehicle's location - say the presence of the vehicle near the junction or town, as described in further detail hereinbelow.

Optionally, the sensor data receiver 111 derives vehicle type data from the received image data, using the OCR and/or other tools, say from an image of a vehicle that drives beside the driver's vehicle, as described in further detail hereinbelow.

Optionally, using the OCR and/or other tool, the sensor data receiver 111 derives vehicle identification data from the received image data, say from an image of a license plate of a vehicle that stops behind the driver's vehicle, as described in further detail hereinbelow.

The system 1000 further includes a spatiotemporal match detector 112, in communication with the sensor data receiver 111.

The spatiotemporal match detector 112 detects a spatiotemporal match between two or more of the vehicle computers, using the sensor data received by the sensor data receiver 111, as described in further detail hereinbelow.

Optionally, the spatiotemporal match detector 112 detects the spatiotemporal match, based on one or more criteria that are predefined, say by a programmer or operator of the system 1000, as described in further detail hereinbelow.

The criteria may include, but are not limited to, for example: a presence of the vehicles within a predefined distance from each other, a presence of the vehicles within a predefined distance from the same shopping mall, junction, roundabout or other location, a presence of the vehicles next to the same traffic light, driving of the vehicles on a same highway, etc., as described in further detail hereinbelow.

Optionally, the spatiotemporal match detector 112 detects the spatiotemporal match, based on the sensor data that the sensor data receiver 111 receives and collects over a short period of time (say of a period of less than one minute), say a time period of a length predefined by a programmer or administrator of the system 1000. Thus, the detection may be made in real time or near real time, as described in further detail hereinbelow.

Optionally, the spatiotemporal match detector 112 detects the spatiotemporal match, based on sensor data that the sensor data receiver 111 receives and collects over a longer period of time (say of one hour), say a time period of a length predefined by a programmer or administrator of the system 1000, as described in further detail hereinbelow.

The system 1000 further includes a channel establisher 113, in communication with the spatiotemporal match detector 112.

The channel establisher 113 attempts to establish a messaging channel between two or more of the vehicle computers that are found to have the detected spatiotemporal match. Thus, the messaging channel is established based on the detection of the match by the spatiotemporal match detector 112.

Optionally, the system further includes a message receiver, in communication with the channel establisher 113.

The message receiver receives a request message from one or more of the vehicle computers, say over the internet and from an application that is installed on the vehicle's computer (say head unit), as described in further detail hereinbelow. The received request message indicates a request to establish the messaging channel, and possibly, is further sent to another vehicle computer over the messaging channel when established, as described in further detail hereinbelow.

Optionally, the message is sent from a first vehicle's computer to the system 1000 (say to the message receiver), upon scanning a sticker placed on a second vehicle, say by a camera of the first vehicle's computer or of a smart cellular phone (say a driver's cell phone) coupled (say using Bluetooth technology) to the first vehicle's computer.

The sticker may include, but is not limited to, for example, a sticker that is printed with a "Let's connect and talk about my car" or "Worst car ever...Ask me why..." text, used by the second vehicle's driver, to invite drivers of cars of a same model, to talk about their cars, a sticker printed with a "Car for sale" text, used to invite potential buyers to contact the car's seller, etc.

Optionally, the sticker is further imprinted with a QR code (or another machine-scannable image) that contains data that upon scanning, triggers the message's sending to the server computer by a dedicated client application installed on the vehicle computer, as described in further detail hereinbelow.

As result, the channel establisher 113 establishes the messaging between the first vehicle's computer and the second vehicle's computer based on the two vehicles' detected spatiotemporal match and the request sent from the first vehicle's computer upon the scanning of the sticker on the second vehicle.

Optionally, the channel establisher 113 conditions the establishing of the messaging channel upon receipt of a request message from at least one of the vehicle computers that have the detected match and/or upon the content and/or type of the request message, as described in further detail hereinbelow.

That is to say that optionally, the channel establisher 113 establishes the messaging channel only after a request for establishing the messaging channel is received from at least one of the vehicle computers that have the detected match, as described in further detail hereinbelow.

Optionally, the channel establisher 113 conditions the establishing of the messaging channel upon receipt of a request message from each respective one of at least two of the vehicle computers that have the detected match.

Optionally, the channel establisher 113 conditions the establishing of the messaging channel upon receipt of the request messages from all vehicle computers that the messaging channel is established between. That is to say that optionally, the channel establisher 113 establishes the messaging channel only between vehicle computers that a request for establishing the messaging channel is received from, as described in further detail hereinbelow.

Optionally, the channel establisher 113 restricts the establishing of the messaging channel, such that the messaging channel is established between up to a certain maximum number of vehicle computers, say between only two of the vehicle computers that the spatiotemporal match is detected between. Optionally, the maximum number is defined by a programmer or user of the system 1000, as described in further detail hereinbelow.

Optionally, the channel establisher 113 conditions the establishing of the messaging channel, such that the messaging channel is established only between vehicle computers that the request messages received from, reveal a mutual interest of the vehicles' drivers to communicate with each other, as described in further detail hereinbelow.

Optionally, the channel establisher 113 restricts the establishing of the messaging channel to a predefined time period after occurrence of the spatiotemporal match (say to a predefined period after the vehicles computers, and hence the vehicles, are in proximity to each other), as described in further detail hereinbelow.

Optionally, the time period is defined in advance of receipt of the sensor data by the sensor data receiver 111, say by a programmer or operator of the system 1000, as described in further detail hereinbelow.

Thus, in one example, there is defined a time period of three minutes for the establishing of the messaging channel. As a result, the channel establisher 113 attempts to establish the messaging channel, only if the detected spatiotemporal match pertains to a point in time that precedes the time of the attempt in up to three minutes.

Optionally, the time period is defined per each specific one of two or more types of requests for establishing the messaging channel, as defined in further detail hereinbelow.

Optionally, the channel establisher 113 establishes the messaging channel, by connecting the computers of the two or more vehicles of the detected spatiotemporal match in a phone call, as described in further detail hereinbelow.

Optionally, the channel establisher 113 establishes the messaging channel, by connecting the two or more vehicle computers that have the detected spatiotemporal match, using an internet-based messaging application installed on the two (or more) vehicle computers, as described in further detail hereinbelow.

Optionally, the client application limits the communication over the messaging channel to a set of fixed messages - say to one or more fixed messages that are defined in advanced of detection of the spatiotemporal match, say by a programmer or operator of the system 1000, as described in further detail hereinbelow.

As a result, there may be avoided a distraction the driver's attention for more than a few seconds, as described in further detail hereinbelow.

Optionally, the system 1000 further includes a fixed message selector, in communication with the message receiver and/or with the client application installed on the vehicle computer.

Optionally, the communication over the messaging channel is limited to a specific set of fixed messages that the fixed message selector selects according to the type of the request message received by the message receiver. Optionally, the fixed message selector sends the selected fixed messages (or rather, information that identifies the selected fixed messages) to the client application, as described in further detail hereinbelow.

Optionally, the communication over the messaging channel is limited to a specific set of fixed messages that is selected according to the type of the message sent by the vehicle computer and received by the message receiver, by the client application installed on the vehicle computer itself.

In one example, when a request message is sent based on a scanning of a sticker on a vehicle for sale, as defined in further detail hereinbelow, the communication over the messaging channel is limited to messages of a type that is relevant to communication with a driver who wishes to sell the vehicle, as described in further detail hereinbelow.

Optionally, the communication is rather limited based on the data that pertains to an owner or driver of one of the vehicles (say based data that indicates that the owner is a car dealer), etc., or any combination thereof, as described in further detail hereinbelow.

For example, the communication may be limited to a specific set of predefined messages of a fixed textual content that is selected for request messages of the car selling type, such as "What's the price?", "Any accidents?", "What is the trim level?", etc., as described in further detail hereinbelow.

Optionally, the message receiver further receives data from a driver of a vehicle that the vehicle computer is installed in, and the channel establisher 113 conditions the establishing of the messaging channel upon the data received from the driver, as described in further detail hereinbelow.

Thus, in one example, the spatiotemporal match detector 112 detects a spatiotemporal mach between more than two vehicle computers (say between five vehicle computers registered to the service implemented using the system 1000), based on the sensor data received by the sensor data receiver 111.

However, in the example, there is defined (say by a programmer of the system 1000) that a messaging channel may be established only between two vehicle computers, as described in further detail hereinabove.

In the example, the channel establisher's 113 attempt to establish the messaging channel is based on the detected spatiotemporal match.

However, the attempt includes a preliminary, separate communication session between the system (say the message receiver) and each individual one of the vehicle computers that have the detected spatiotemporal match, for receiving additional data from a driver of each one of the vehicles installed with the vehicle computers of the detected match.

**In** each one of the separate communication sessions, the driver communicated with, is asked one or more questions, in order to confirm that the driver is interested in communicating with a specific one of the other vehicle computers (i.e. with a driver of the specific vehicle installed with the vehicle computer) of the detected spatiotemporal match, or appears to have potential for such an interest.

Then, the channel establisher 113 establishes the messaging channel between pairs of vehicle computers, installed on vehicles driven by drivers that show a mutual interest in communicating with each other, as described in further detail hereinbelow.

Optionally, in each one of the separate communications, the driver is asked one or more questions, so as to confirm that the driver is interested in communicating with the driver of each specific one of the other vehicle of the detected spatiotemporal match.

Alternatively or additionally, the driver is presented with information about the detected spatiotemporal match and/or other detected spatiotemporal matches of the driver's vehicle computer, to choose from, etc., as described in further detail hereinbelow.

Alternatively or additionally, in each one of the separate communications, the driver is asked one or more other questions, say questions that pertain to the driver's gender, the vehicle's color, the vehicle's location, etc., as described in further detail hereinbelow.

Optionally, the channel establisher 113 conditions the establishment of the messaging channel upon the driver's input during the separate communication with the driver (say the driver's answer to the questions), as described in further detail hereinabove.

The attempt to establish the messaging channel may fail, for one of a number of reasons.

In one example, the attempt to establish the channel fails if during the attempt, at least one of the vehicle computers that have the detected spatiotemporal match, indicates (say in an error message) that no driver is present in the vehicle (say when the vehicle is parked and locked).

In a second example, the attempt to establish the channel fails if during the attempt, at least one of the vehicle computers that have the detected match, is in a sleep mode (say a sleep mode that the vehicle computer is programmed to go into when the vehicle is locked, as known in the art).

Optionally, the message receiver further receives from at least one of the vehicle computers, data that characterizes a driver of the vehicle that the vehicle computer is installed in, and the channel establisher 113 conditions the establishing of the messaging channel upon the received data that characterizes the driver.

Thus, in a specific example, one of the vehicles is a car-sharing vehicle.

In the specific example, the channel establisher's 113 attempt to establish the messaging channel is made based a request that the message receiver receives from one of two vehicle computers that, after or before the receipt of the request, are detected to have a spatiotemporal match that precedes the receipt of the request, as described in further detail hereinbelow.

However, in the specific example, the message receiver further receives data that characterizes a first driver of one of the vehicles, which vehicle is a car-sharing vehicle. The first driver drives the car-sharing vehicle when the request is received from the car-sharing vehicle's vehicle computer. The data that characterizes the first driver may be received with the request (say when the request is received from the car-sharing vehicle's vehicle computer), or rather, separately, say before or after the receipt of the request, as described in further detail hereinbelow.

The data that characterizes the first driver may include, but is not limited to: a name input by the driver to the vehicle computer, a driver ID read from a magnetic card used by the driver to open the car-sharing vehicle, a key extracted (say by hashing) from an image of the driver as captured by a camera installed inside the driver's vehicle, the driver's gender, etc., as described in further detail hereinbelow.

In the specific example, the spatiotemporal match detector 112 detects the spatiotemporal match between the two vehicle computers, based on the sensor data received by the sensor data receiver 11. Then, a few minutes after the detection of the match, the message receiver receives the request message and the data that characterizes the first driver, as described in further detail hereinabove.

In the specific example, in response to the receipt of the request message, say a few minutes after the receipt of the request message, the channel establisher 113 attempts to establish a messaging channel between the two vehicles that have the detected spatiotemporal match.

During the attempt, when the channel establisher 113 communicates with the first driver's vehicle computer for establishing the messaging channel, the first driver's vehicle computer issues a warning message that indicates to the channel establisher 113, that the vehicle is already driven by a second driver (say after the first driver leaves the vehicle that is a car-sharing vehicle, and another driver uses the vehicle).

As a result, the channel establisher's 113 attempt to establish the messaging channel fails.

Optionally, the message receiver further allows a party, to define a secondary computing device for one of the vehicle computers, for a specific driver, etc., or any combination thereof, as described in further detail hereinbelow.

The party may be, for example, a user or a programmer of the system 1000 or of the vehicle computer, or rather a third-party computer in communication with the system 1000 and/or with the vehicle computer, as described in further detail hereinbelow.

Optionally, the secondary computing device's definition is communicated to the system's 1000 message receiver, to channel establisher 113, or to both, say from the third party's computer or rather, from the vehicle computer, as described in further detail hereinbelow.

Thus, in a first example, upon the channel establisher's 113 failing to establish the messaging channel, the channel establisher's 113 tries to establish a messaging channel between a secondary computing device defined for a driver of a first one of the vehicle computers that have the detected match, and a second one of the vehicle computers that have the detected match, as described in further detail hereinbelow.

The secondary computing devices may be identified using phone numbers (say of one or more of the drivers of the vehicle installed with the vehicle computer), etc., as described in further detail hereinbelow.

In the first example, the secondary computer is a smart phone in use by a driver of a vehicle of a car-sharing service, and the phone number of the smart phone is automatically downloaded to the vehicle computer of the vehicle upon entry of the driver to the vehicle, say from a computer of an operator of the car-sharing service.

After the driver leaves the car-sharing vehicle, when the channel establisher's 113 attempt to establish a messaging channel with the vehicle fails because the driver is no longer in the car-sharing service's vehicle, the vehicle's computer sends a warning message to the channel establisher's 113. The warning message indicates that the driver is no longer in the car-sharing service's vehicle and defines the secondary computer for the driver (say by providing the driver's phone number in the warning message).

Optionally, the system 1000 further includes a vehicle register updater, in communication with the spatiotemporal match detector 112, the channel establisher 113, or both.

The vehicle register updater registers the vehicle computers to a service implemented using the system 1000, as described in further detail hereinbelow.

For registering a vehicle computer, the vehicle register updater receives from an owner or driver of the vehicle installed with the vehicle computer, registration data.

The registration data may include, but is not limited to data on the vehicle, say the vehicle's license plate number, model, model year, color, brand, type (say car, motorcycle, etc.), and/or cellular phone number etc., or any combination thereof.

The received registration data may additionally include, but is not limited to data on one or more of the vehicle's drivers - say the driver's name, ID, cellular phone number, license number, an image of the driver, a key extracted (say by hashing) from an image of the driver, the driver's gender, etc., or any combination thereof.

Optionally, the registration data further includes data that defines one or more secondary computing devices for each one of the registered vehicle computers.

The secondary computing devices may be identified using an email address, a mobile phone number or other personal identify method, as described in further detail hereinbelow.

Optionally, the vehicle register updater stores the received registration data in a dedicated database, and the stored data is later retrieved from the database and used for detecting the spatiotemporal match and/or for establishing the messaging channel, as described in further detail hereinbelow.

In one example, for registering a vehicle computer, a driver or owner of a vehicle scans a sticker with a logo, QR code, or printed text, say for downloading a registration client application to a cellular phone, say from the Google^{®} Play or Apple^{®} App Store, as known in the art.

The downloaded application is then used by the owner or driver, for registering the vehicle computer, and for providing registration data to the system 1000 (say to the vehicle register updater), as described in further detail hereinabove.

Optionally, after the registration of the vehicle computer, a vehicle client application is downloaded to the vehicle computer installed in each one of the owner's/driver's vehicles.

The downloaded vehicle client application is used for communication between the vehicle computer and system 1000 and/or another vehicle computer subscribed to the service, as described in further detail hereinabove.

Reference is now made to **Fig. 2****,** which is a flowchart schematically illustrating a method of vehicle-to-vehicle messaging, according to an exemplary embodiment of the present invention.

An exemplary method of vehicle-to-vehicle messaging, according to an exemplary embodiment of the present invention, may be executed by a computing device, say be a server computer, as described in further detail hereinbelow.

Optionally, the computing device (say server computer) is used by a party that provides a service that allows communication between drivers over a messaging channel, during or after the presence of the drivers' vehicles in proximity and/or in a same region, based on detection of the presence, as described in further detail hereinabove.

The computing device may be a single computer, a group of computers in communication over a network, a computer circuitry that includes one or more electric circuits, a computer processor and a computer memory, etc., or any combination thereof, as described in further detail hereinbelow.

Thus, in one example, the method of vehicle-to-vehicle messaging is executed by a system 1000 that includes a circuit (say an integrated electric circuit), as described in further detail hereinabove.

The circuit of the example includes one or more computer processors, one or more computer memories (say a DRAM (Dynamic Random Access Memory) component, an SRAM (Static Random Access Memory) component, an SSD (Solid State Drive) component, etc.), one or more other components, etc., or any combination thereof, as described in further detail hereinbelow.

The computer memory stores instructions, say instructions that are executable by one or more of the computer processor(s), for performing the steps of the exemplary method, as described in further detail hereinbelow.

In the exemplary method, there is received 210 and collected 210 sensor data from two or more vehicle computers of respective two or more vehicles (say cars, motorcycles, etc., or any combination thereof). The sensor data is received 210 when the vehicles are driven by their respective drivers, say by the sensor data receiver 111 of system 1000, as described in further detail hereinabove.

The vehicle computers may include, for example, a computer of the vehicle's head unit, infotainment system and/or another computer installed in the vehicle, as known in the art.

The sensor data received 210 from each one of the vehicles may include, but is not limited to position data measured by a sensor of the vehicle and/or calculated by the vehicle's computer using GNSS (Global Navigation Satellite System) data such as GPS (Global Position System) data or Galileo data, as known in the art.

The sensor data received 210 from the vehicle may additionally or alternatively, include dead reckoning data calculated by the vehicle's computer (say data calculated by extrapolating on a position determined previously by one of the vehicle's sensors, using speed, direction and elapsed time measurements, as known in the art).

The received 210 sensor data may additionally or alternatively, include, but is not limited to image data captured by the vehicle's computer (say using one of the vehicle's cameras), by a camera of a smart cellular phone coupled (say using Bluetooth technology) to the vehicle's computer, etc.

Optionally, in the method, there is further derived location data from the received 210 image data, say by the sensor data receiver 111 of system 1000, say using an OCR (Optical Character Recognition) or other tool, as described in further detail hereinbelow.

For example, the received 210 sensor data may include an image of a road sign that identifies a specific junction or town, which image is used to derive the vehicle's location - say the presence of the vehicle near the junction or town identified by the road sign, when the sensor data is received 210, as described in further detail hereinbelow.

Optionally, there is further derived vehicle type data from the received 210 image data, say by the sensor data receiver 111 of system 1000. The vehicle type may be used, for example, as a criterion to condition the establishing 230 of a messaging channel between the vehicle computers on, as described in further detail hereinbelow.

For example, the sensor data may include an image of a vehicle that stops beside the driver's vehicle (say in front of a traffic light), which image may be used to determine the type (say model or manufacturer) of the vehicle that stops beside the driver's vehicle when the sensor data is received 210, as described in further detail hereinbelow.

Optionally, there is derived vehicle identification data from the received 210 image data, say by the sensor data receiver 111 of system 1000. The identification data may be used, for example, as a criterion to condition the establishing 230 of a messaging channel between the vehicle computers on, as described in further detail hereinbelow.

For example, the sensor data may include an image of a license plate of a vehicle that stops behind the driver's vehicle. Using tools such as OCR, the image may be used to determine the registration ID of the vehicle that stops near the driver's vehicle when the sensor data is received 210.

Then, one or more attributes of the vehicle mat be retrieved from a database in use by the server computer, as described in further detail hereinbelow.

The attributes may include, but are not limited to, for example, the vehicle's owner name as input to the database when the vehicle is registered to a service implemented on the server computer, the vehicle's driver(s), etc., as described in further detail hereinbelow.

In one example, the attributes include attributes that identify one or more respective drivers of the vehicle, an attribute that identify the vehicle's owner, attributes that make up a profile of the owner (say an attribute that indicates that the owner is a car dealer), attributes that make up a profile of one of the vehicle's drivers, etc., as described in further detail hereinbelow.

Optionally, the received 210 sensor data, the derived location data, the derived vehicle type data, the derived vehicle identification data, the attributes, or any combination there of, is later used for detecting the 220 spatiotemporal match, for attempting to establish 230 the messaging channel, or for both the detecting 220 and attempting 230, as described in further detail hereinbelow.

Next, there is detected 220 a spatiotemporal match between two or more of the vehicle computers, using the received 210 sensor data, say by the spatiotemporal match detector 112 of system 1000, as described in further detail hereinabove.

Optionally, the detection 220 of the spatiotemporal match is based on one or more criteria that are predefined, say by a programmer or operator of the server computer, as described in further detail hereinbelow.

The criteria may include, but are not limited to a presence of the vehicles within a predefined distance from each other, a presence of the vehicles within a predefined distance from the same shopping mall, junction, roundabout or other location, a presence of the vehicles next to a same traffic light, a driving of the vehicles on a same highway, etc., as described in further detail hereinbelow.

Optionally, the detection 220 of the spatiotemporal match is based on the sensor data received 210 and collected 210 over a short period of time (say of a period of less than one minute), say a time period of a length predefined by a programmer or administrator of the server computer, such that the detection 220 is made in real time or near real time, as described in further detail hereinbelow.

Optionally, the detection 220 is based on a longer period of time (say of one hour), say a time period of a length predefined by a programmer or administrator of the server computer, as described in further detail hereinbelow.

Based on the detection 220, an attempt is made to establish 230 a messaging channel between the vehicle computers that are found to have the detected 220 spatiotemporal match, say by the channel establisher 113 of system 1000.

Optionally, the method further comprises receiving from one or more of the vehicle computers that have the detected 220 match, a request message that indicates a request to establish 230 the messaging channel.

Optionally, the request message is received by the message receiver of system 1000, as described in further detail hereinabove.

Optionally, establishing 230 of the messaging channel is conditioned upon the receipt of the request message from at least one of the vehicle computers that have the detected 220 match and/or upon a content and/or a type of the request message, as described in further detail hereinbelow.

That is to say that optionally, the messaging channel is established 230 only after a request for establishing 230 the messaging channel is received from at least one of the vehicle computers that have the detected 220 spatiotemporal match, as described in further detail hereinbelow.

Optionally, the method further comprises receiving from each respective one of at least two of the vehicle computers that have the detected 220 spatiotemporal match, a request message that indicates a request to establish 230 a messaging channel, and conditioning the establishing 230 of the messaging channel upon the receipt of the request messages from all vehicle computers that the messaging channel is established 230 between.

That is to say that optionally, the messaging channel is established 230 only between vehicle computers that a request for establishing 230 the messaging channel is received from, as described in further detail hereinbelow.

Optionally, the messaging channel is established 230 between up to a certain maximum number of vehicle computers, say between only two of the vehicle computers that the spatiotemporal match is detected 220 between, or rather, between up to three of the vehicle computers. The maximum number may be defined by a programmer or user of the server computer (say of system 1000), as described in further detail hereinbelow.

Optionally, the message is sent from a first vehicle's computer to the server computer (say to the system 1000's message receiver), upon scanning a sticker adhered to a second vehicle, say by a camera of the first vehicle's computer or of a smart cellular phone (say a driver's cell phone) coupled to the first vehicle's computer.

The sticker may include, but is not limited to, for example, a sticker that is printed with a "Let's connect and talk about my car" or "Worst car ever...Ask me why..." text, used by the second vehicle's driver, to invite drives of cars of a same model, to talk about their cars, a sticker printed with a "Car for sale" text, used to invite potential buyers to contact the vehicle's seller, etc.

Optionally, the sticker is further imprinted with a QR code (or another machine-readable code) that contains data that upon scanning, triggers the message's sending to the server computer by a dedicated client application installed on the vehicle computer, as described in further detail hereinbelow.

As result, the messaging channel is established 230 between the first vehicle's computer and the second vehicle based on the two vehicles' detected 220 spatiotemporal match and the request sent from the first vehicle's computer upon the scanning of the sticker adhered to the second vehicle.

Optionally, the messaging channel is established 230 only between vehicle computers that the request messages received from, reveal a mutual interest of the vehicles' drivers to communicate with each other, as described in further detail hereinbelow.

Thus, in one example, it is defined that a messaging channel can involve only two vehicle computers (i.e. a maximum number of two vehicle computers), as described in further detail herein below.

In the example, there is determined 220 a spatiotemporal match between three vehicle computers.

However, a request message received from a first one of the three vehicle computers indicates a request to communicate with a second specific one of the three vehicle computers, and a request message received from the second vehicle computer indicates a request to communicate with the first vehicle computer. Further in the example, a request message received from a third one of the vehicle computer, also indicates a request to communicate with the first vehicle computer.

Accordingly, since only the request messages received from the first vehicle computer and the second vehicle computer indicate a mutual interest, a channel is established 230 only between the first vehicle computer and the second vehicle computer.

In a second example too, there is determined 220 a spatiotemporal match between three vehicle computers.

In the second example, a request received from a first one of the three vehicle computers indicates a request to communicate with a specific second one of the three vehicle computers. However, in the second example, a request received from the second vehicle computer indicates a request to communicate with a specific third one of the vehicle computers, and a request received from the third vehicle computer, indicates a request to communicate with the first vehicle computer.

Thus, in the second example, none of vehicle computers that have the detected 220 match seem to be installed in vehicles driven by drivers that have a mutual interest to communicate with each other. As a result, no messaging channel is established 230 between any of the three vehicles determined 220 to have the spatiotemporal match.

Optionally, the detected 220 spatiotemporal match pertains to a point in time that is of a predefined time period before the establishing 230 of the messaging channel, say of a time period defined in advance (say by a programmer or operator of the server computer), as described in further detail hereinbelow.

In one example, there is defined a time period of three minutes for the establishing 230. As a result, the attempt to establish 230 the messaging channel, is made only based on a spatiotemporal match that pertains to a point in time that precedes the time of the attempt in up to three minutes.

Optionally, there is defined a time period for establishing 230 the messaging channel, per each specific one of two or more types of request for establishing 230 the messaging channel, that the establishing 230 may be based on, as defined in further detail hereinbelow.

Thus, in a first example, a twelve hour time period is defined for requests of a romantic type (say a request in a form of a textual message that includes romantic content such as "If you are single and interested, I'd like to connect with you"). As a result, the attempt to establish 230 the messaging channel, is made only based on a spatiotemporal match that pertains to a point in time that precedes the time of the attempt in up to twelve hours.

In a second example, a two minute time period is defined for requests of a type that requires immediate attention (say a request in a form of a textual message that bears content such as "Turn on the lights" or "Your have a flat tire"), as described in further detail hereinbelow. As a result, the attempt to establish 230 the messaging channel, is made only based on a spatiotemporal match that pertains to a point in time that precedes the time of the attempt in up to two minutes.

Optionally, the messaging channel is established 230 by connecting the computers of two or more vehicles of the detected 220 spatiotemporal match in a phone call. For example, the channel may be established 230 by connecting the two vehicle computers and the server computer in a conference call, say in a call based on voice over Internet Protocol (VoIP), or rather in a cellular call, as known in the art.

Optionally, the messaging channel is established 230 by connecting the two or more vehicle computers that have the detected 220 spatiotemporal match, using an internet-based messaging application installed on the two (or more) vehicle computers, as known in the art.

In one example, the messaging application is a dedicated application installed in advance of the receipt 210 of the sensor data, on each one of the vehicle computers that are later found to have the detected 220 spatiotemporal match.

Specifically, in the example, the client application is provided by the third party that uses the server computer, for providing a service that allows communication between drivers over a messaging channel, during or after the presence of the drivers' vehicles in proximity and/or in the same region, as described in further detail hereinabove.

Thus, in the example, the client application is installed on each vehicle computer that is registered to the service, as described in further detail hereinbelow.

In the example, the client application provided to the vehicle computers of the example, connects 230 the two (or more) vehicles that have the detected 220 match, in a messaging channel that is implemented by connecting 230 the two (or more) vehicles, say over the internet.

Optionally, the client application limits the communication over the messaging channel to a set of fixed messages - say to one or more fixed messages that are defined in advance of the detection 220, say by a programmer or operator of the server computer. As a result, there may be avoided a distraction the driver's attention for more than a few seconds, as described in further detail hereinbelow.

Optionally, the communication over the messaging channel is limited to a specific set of fixed messages, which set is selected according to the received message's type and/or according to data that pertains to a driver and/or owner of the vehicle installed with the vehicle computer that has the detected 220 match.

For example, the set of fixed messages may be selected based on one or more attributes of a profile of the vehicle's owner, say an attribute that indicates that the owner is a car seller, a car dealer, etc., as described in further detail hereinabove.

The set of fixed messages may be selected by the server computer (say by the system's 1000 fixed message selector), by the client application installed on the vehicle computer, or by both the server computer and the client application, as described in further detail hereinabove.

In one example, a message is sent based on a scanning of a sticker on the car on sale, and is classified (say by the channel establisher 113 of the system 1000 or rather, by the message receiver of the system 1000), as a message of car selling type, as described in further detail hereinbelow. Accordingly, the communication over the messaging channel is limited to messages relevant to communication with a driver who wishes to sell the car driven by the driver.

For example, the communication may be limited to a specific set of predefined messages of a fixed textual content, such as "What's the price?", "Any accidents?", "What is the trim level?", etc., as described in further detail hereinabove.

In one example, the application allows the driver to select a message among two or more specific fixed messages presented to the driver on a screen of an infotainment system of the driver's vehicle (say among "Turn your lights on", "You have a flat tire", "Please excuse me, I am a new driver", and "Thanks" messages).

However, the driver cannot send any other messages (particularly, no messages that would require typing text while driving), but the specific, fixed messages.

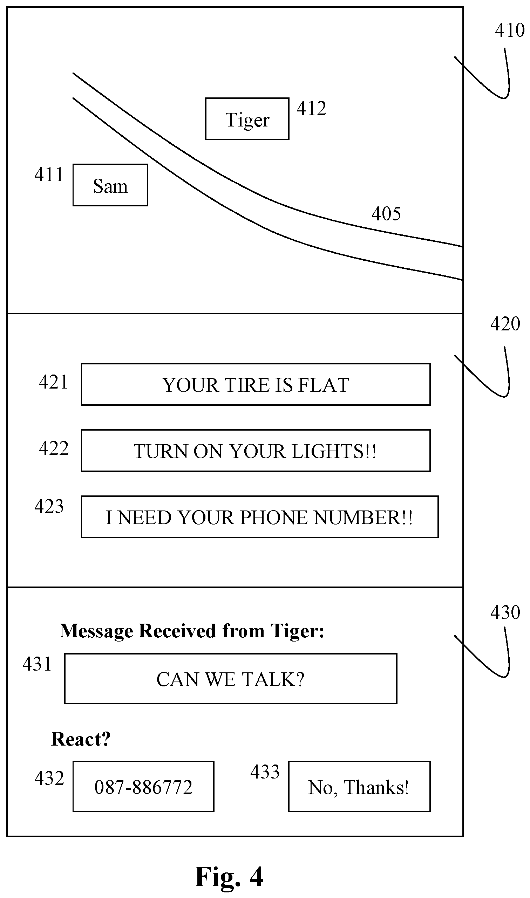

Optionally, the fixes message may be sent by a driver of one of the vehicles that the vehicle computers are installed on, using a dedicated GUI (Graphical User Interface) implemented on the vehicle computer (say on the vehicle's infotainment system), as described in further detail hereinbelow and as illustrated using Fig. 4.

Optionally, the exemplary method further comprises receiving data from a driver of a vehicle that the vehicle computer is installed in (say by the message receiver of system 1000), and conditioning the establishing 230 of the messaging channel upon the data received from the driver.

Thus, in one example, there is detected 220 a spatiotemporal mach between more than two vehicle computers (say between five vehicle computers registered to the service implemented on the server computer), based on the received 210 sensor data.

However, in the example, there is defined (say by a programmer of the server computer) that a messaging channel may be established 230 only between two vehicle computers, as described in further detail hereinabove.

In the example, the attempt to establish 230 the messaging channel is based on the detected 220 spatiotemporal match.

However, the attempt includes a preliminary, separate communication session between the server computer and each individual one of the vehicle computers that have the detected 220 spatiotemporal match, for receiving additional data from a driver of each one of the vehicles installed with the vehicle computers of the detected 220 match.

In each one of the separate communication sessions, the driver communicated with, is asked one or more questions, say so as to confirm that the driver is interested in communicating with a specific one of the other vehicle computers (i.e. with a driver of the specific vehicle installed with the vehicle computer) of the detected 220 spatiotemporal match, or appears to have potential for such an interest.

Then, a messaging channel is established 230 between pairs of vehicle computers that have the detected 220 spatiotemporal match and that are installed on vehicles driven by drivers that during the respective separate communications, show a mutual interest in communicating with each other, as described in further detail hereinbelow.

Optionally, in each one of the separate communications, the driver is asked one or more questions, so as to confirm that the driver is interested in communicating with the driver of each specific one of the other vehicle of the detected 220 spatiotemporal match. Alternatively or additionally, the driver is presented with information about the spatiotemporal match and/or other spatiotemporal matches of the driver's vehicle computers, to choose from, etc., as described in further detail hereinbelow.

The attempt 230 to establish the messaging channel may fail, for one of a number of reasons.

In one example, the attempt to establish 230 the channel fails if when attempting to establish 230 the channel, at least one of the vehicle computers that have the detected 220 spatiotemporal match, indicates (say in an error message sent from the vehicle computer to the server computer) that no driver is present in the vehicle (say when the vehicle is parked and locked).

In a second example, the attempt to establish 230 the channel fails if when attempting to establish 230 the channel, at least one of the vehicle computers that have the detected 220 match, is in a sleep mode (say a sleep mode that the vehicle computer is programmed to go into a when the vehicle is locked, as known in the art).

Optionally, in the exemplary method, there is further received from at least one of the vehicle computers, data that characterizes a driver of the vehicle that the vehicle computer is installed in, and the establishing 230 of the messaging channel, is further conditioned upon the received data that characterizes the driver.

Thus, in a specific example, one of the vehicles is a car-sharing vehicle.

In the specific example, the attempt to establish 230 the messaging channel is made based a request message received from one of two vehicle computers that, after or before the receipt of the request, are detected 220 to have a spatiotemporal match that precedes the receipt of the request, as described in further detail hereinbelow.

However, in the specific example, there is further received data that characterizes a first driver of one of the vehicles. The first driver drives a car-sharing vehicle. The first driver drives the car-sharing vehicle when the request message is received from the car-sharing vehicle. The data that characterizes the first driver may be received in the request message, or rather, separately, say before or after the receipt of the request message, as described in further detail hereinabove.

The data that characterizes the first driver may include, but is not limited to: a name input by the driver to the vehicle computer, a driver ID read from a magnetic card used by the driver to open the car-sharing vehicle, a key extracted (say by hashing) from an image of the driver as captured by a camera installed inside the car-sharing vehicle, the driver's gender, etc., as described in further detail hereinbelow.

In the specific example, the spatiotemporal match between the two vehicle computers is detected 220 based on the received 210 sensor data, and a few minutes after the detection 220, there is also received the request message and the data that characterizes the first driver, say by the message receiver of system 1000, as described in further detail hereinabove.

In the specific example, in response to the receipt of the request message, say a few minutes after the receipt of the request message, an attempt is made to establish 230 a messaging channel between the two vehicles that have the detected 220 spatiotemporal match.

In the attempt, when the server computer communicates with the first driver's vehicle computer for establishing 230 the messaging channel, the first driver's vehicle computer issues a warning message that indicates to the server computer, that the vehicle is already driven by a second driver (say after the first driver leaves the vehicle that is a car-sharing vehicle, and another driver uses the vehicle).

As a result, the attempt to establish 230 the messaging channel fails.

According to the claimed embodiment there is defined a secondary computing device, for one of the vehicle computer, for a specific driver, etc., or any combination thereof, as described in further detail hereinabove.

The secondary computing device may be defined by a user or programmer of the server computer, of the vehicle computer, or rather by a third-party computer in communication with the server computer and/or with the vehicle computer, as described in further detail hereinbelow.

Thus, in a first example, upon failing to establish 230 the messaging channel, an attempt is made, to establish a messaging channel between a secondary computing device defined for a driver of a first one of the vehicle computers that have the detected 220 match, and a second one of the vehicle computers that have the detected 220 match, as described in further detail hereinbelow.

In the first example, the secondary computer is a smart phone in use by a driver of a vehicle of a car-sharing service (say the first driver of the example presented hereinabove), and the phone number of the smart phone is automatically downloaded to the vehicle computer of the vehicle upon entry of the driver to the vehicle, say from a computer of an operator of the car-sharing service.

After the driver leaves the car-sharing vehicle, when an attempt to establish 230 a messaging channel with the vehicle fails because the driver is no longer in the car-sharing service's vehicle, the vehicle's computer sends a warning message to the server computer. The warning message indicates that the driver is no longer in the car-sharing service's vehicle and defines the secondary computer for the driver (say by providing the driver's phone number in the warning message sent to the server computer).

In a second example, whenever a vehicle computer of a specific vehicle subscribes to the service implemented on the server computer, there is defined (say by the vehicle's owner), a secondary computing device, say using an IP (Internet Protocol) Address or a phone number of the secondary computing device, as known in the art.

In the second example, upon failing to establish 230 the messaging channel, say when both vehicle computers are in a sleep mode, an attempt is made to establish a messaging channel between respective secondary computing devices defined for each one of the two vehicle computers that have the detected 220 spatiotemporal match, as described in further detail hereinbelow.

In one example, two cars of a same new model stop side by side, next to each other, in front of a traffic light, at a road junction. The drivers of the two cars would like to talk and share information about their new cars. However, the light changes before the two can open their car windows and talk, and the drivers drive away from the junction.

With an exemplary embodiment of the present invention, shortly (say one minute) after the presence of the two vehicles, side by side, in front of that same traffic light, based on sensor data (say location data) that originates from the two vehicles, there is detected 220 the two vehicles' computers spatiotemporal match.

Further in the example, shortly after the traffic light changes and the two vehicles drive away from the junction, each one of drivers clicks a dedicated button, say a button of a GUI (Graphical User Interface) presented to the driver on his car's head unit. Upon the clicking of the button, the driver's vehicle computer sends a request message that indicates a request to establish a messaging channel, to the server computer, as described in further detail hereinbelow.

In the example, the request message is a general request to establish a messaging channel. Thus, the driver need not select among channel request types, identify the reason for his request, identify the driver that the driver wishes to connect with, etc. That is to say, that the driver need not do anything but indicate the driver's presence in a situation in which the driver would like to communicate with a driver of a certain other vehicle, even if not in real time or near real time of the situation's occurrence.

Upon receipt of the request messages from both drivers (i.e. from the vehicle computers of the vehicles driven by the two drivers) and after the detection 220 of the spatiotemporal match between the two vehicle computers, an attempt is made to establish 230 a messaging channel between the vehicle computers of the two vehicles, say by connecting the vehicle computers of the two cars in a phone call, etc., as described in further detail hereinbelow.

Alternatively, in the example, the drivers do not click the button, and the attempt to establish 230 the messaging channel is based on the detected 220 spatiotemporal match, and includes separate communications between the server computer and each individual one of the two vehicle computers.

In each one of the separate communications, the driver is asked one or more questions, so as to confirm that the driver is interested in communicating with the driver of the other vehicle of the detected 220 spatiotemporal match, is presented with information about the spatiotemporal match and/or other spatiotemporal matches of the driver's vehicle to choose from, etc., or any combination thereof, as described in further detail hereinbelow.

In another example, a request message received from a vehicle computer of a first one of three vehicles that stop side by side in front of a junction, is of a specific type - say a male-to-female romantic request that reflects an interest of the first vehicle's male driver in an attractive female driver of a second one of the three vehicles.

For example, the request may be in a form of a predefined, fixed textual message, such as a "Hi. It would be great if you can accept connection request so we can talk" message that after the messaging channel is established 230, is also sent over the established 230 channel, to the female driver's vehicle computer.

In the example, there is detected 220 a spatiotemporal match between the vehicle computers of the three vehicles.

However, the first vehicle is driven by the male driver who sends the male-to-female romantic request message, a second one of the vehicles is also driven by a male driver, and a third one of the vehicles is driven by the female driver.

In the example, the establishment 230 of the messaging channel is based on the gender of the drivers as indicated in data received from the vehicle computers of the three vehicles and/or stored in a profile of the driver that is stored in a database, as well as on the detected 220 match, as described in further detail hereinabove.

Accordingly, in the example, the messaging channel is established 230 only between the first vehicle's and third vehicle's vehicle computers, as described in further detail hereinbelow.

Optionally, the method further includes registering the vehicle computers to the service implemented using the method, say by the vehicle register updater of system 1000, as described in further detail hereinabove.

When registering a vehicle computer, there is received registration data from an owner or driver of the vehicle installed with the vehicle computer.

The registration data may include, but is not limited to data on the vehicle, say the vehicle's license plate number, model, model year, color, brand, type (say car, motorcycle, etc.), cellular phone number, , etc., or any combination thereof.

The received registration data may additionally include, but is not limited to data on one or more of the vehicle's drivers - say the driver's name, ID, cellular phone number, license number, an image of the driver, a key extracted (say by hashing) from an image of the driver, the driver's gender, another attribute of the driver, etc., or any combination thereof, as described in further detail hereinabove.

Optionally, the registration data further includes data that defines one or more secondary computing devices for each one of the registered vehicle computers. The secondary computing devices may be defined using the secondary device's one or more phone numbers (say of one or more of the drivers of the vehicle installed with the vehicle computer), another key identifying the secondary computing device (say an email address or a unique number that identifies a specific client application installation), etc.

Optionally, the received registration data is stored in a database, and is later retrieved from the database and used for detecting 220 the spatiotemporal match and/or for establishing 230 the messaging channel, as described in further detail hereinabove.

In one example, for registering a vehicle computer, a driver or owner of a vehicle scans a sticker with a logo, QR code, or printed text, say for downloading an application to a cellular phone, say from the Google^{®} Play or Apple^{®} App Store, as known in the art.

The downloaded application is then used by the owner or driver, for registering the vehicle computer, and for providing registration data to the server computer (say to the system's 1000 vehicle register updater), as described in further detail hereinabove.

Optionally, after the registration of the vehicle computer, a vehicle client application is downloaded to the vehicle computer installed in each one of the owner's/driver's vehicles.

The vehicle client application is used for communication between the vehicle computer and the server computer (say with the system 1000), and/or another vehicle computer subscribed to the service, as described in further detail hereinabove.

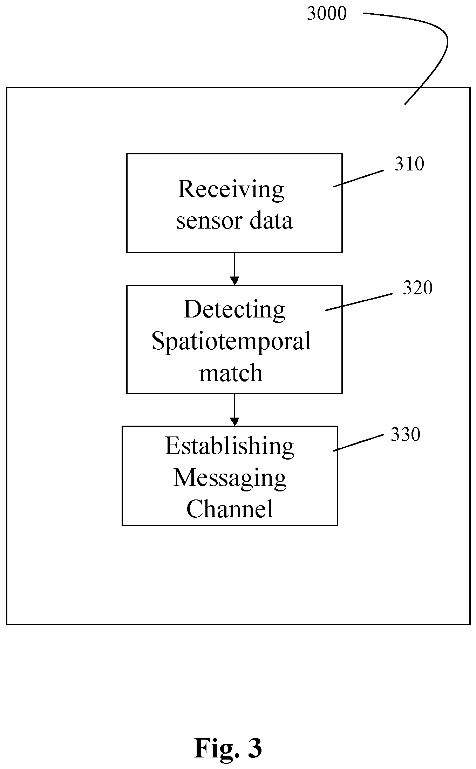

Reference is now made to **Fig. 3****,** which is a simplified block diagram schematically illustrating an exemplary non-transitory computer readable medium having stored thereon, instructions for causing a processing circuitry to perform a process of vehicle-to-vehicle messaging, according to an exemplary embodiment of the present invention.

According to an exemplary embodiment of the present invention, there is provided a non-transitory computer readable medium 3000.

The medium 3000 may include, but is not limited to, a Micro SD (Secure Digital) Card, a CD-ROM, a USB-Memory, a Hard Disk Drive (HDD), a Solid State Drive (SSD), a computer's ROM chip, an SRAM (Static Random Access Memory), a DRAM (Dynamic Random Access Memory) or other RAM (Random Access Memory) component, a cache memory component of a computer processor, etc., or any combination thereof, as known in the art.

Optionally, the computer readable medium 3000 is a part of a system used to implement the exemplary method illustrated in **Fig. 2****,** say of system 1000, as described in further detail hereinabove.

Optionally, the instructions are computer-executable instructions coded and stored on the medium 3000 by a programmer. The instructions may be executed on one or more computers, say by one or more processors of system 1000, as described in further detail hereinabove.

When executed, the instructions cause a processing circuitry, such as system 1000's, to perform a process of vehicle-to-vehicle messaging, by implementing the exemplary method, as described in further detail hereinabove and illustrated using **Fig. 2****.**

Thus, the instructions include, but are not limited to instructions that when executed, implement the method's step of receiving 310 sensor data from a plurality vehicle computers of respective vehicles being driven, and collecting 310 the received 310 sensor data.

The instructions further include, but are not limited to instructions that when executed, implement method's step of detecting 320 a spatiotemporal match between at least two of the vehicle computers, using the collected 310 sensor data.

The instructions further include, but are not limited to instructions that when executed, implement method's step of trying to establish 330 a messaging channel between at least two of the vehicle computers having the detected 320 spatiotemporal match, as described in further detail hereinabove.

Reference is now made to **Fig. 4****,** which is a simplified block diagram schematically illustrating an exemplary Graphical User Interface, according to an exemplary embodiment of the present invention.

An exemplary GUI (Graphical User Interface), according to an exemplary embodiment of the present invention, includes three parts 410-430.

Optionally, the exemplary GUI is implemented by a dedicated client application installed on each vehicle computer subscribed to the service implemented using system 1000, as described in further detail hereinabove.

Optionally, the three parts 410-430 are presented together on a screen of one of the vehicle computers. Alternatively, a driver of a vehicle installed with the vehicle computer may switch between the pages, each one of which pages is presented separately to the driver.

A first part 410 of the exemplary GUI is a live map 410 that shows the area that the vehicle drives in and specific graphical elements that represent the driver's vehicle and potentially, one or more nearby vehicles that are subscribed to a service implemented using system 1000, as described in further detail hereinabove.

Thus, in a specific example illustrated using **Fig. 4****,** there is presented on the map 410, a road 405 that a first driver's vehicle drives on, the first driver's vehicle 411 with a nickname ("Sam") selected by the first driver when the first driver's vehicle computer prescribes to the service. Also presented on the map 410, is a second driver's vehicle 412 with a nickname ("Tiger") selected by the second driver when the second driver's vehicle computer prescribes to the service. The vehicles 411-412 are presented on the map 410, in positions that represent the vehicles' respective physical position along the road 405.

A second part 420 of the exemplary GUI is an interface that allows a driver, say the first driver, to send a predefined fixed message, i.e. a message of predefined fixed textual content, by clicking on one of a number of buttons 421-423, each which buttons 421-423 is captioned with a different one of the predefined fixed messages, as described in further detail hereinbelow.

The buttons 421-423 presented on the second part depend on a set of fixed messages, which set of fixed messages may be selected by the server computer (say by system 1000), by the client application installed on the vehicle computer, etc., or any combination thereof, as described in further detail hereinabove.

The set of fixed messages may be selected according to a type of a request message received by the server computer (say by the system's 1000 message receiver), one or more attributes that make up a profile of the vehicle's driver, one or more attributes that make up a profile of the vehicle's owner, etc., or any combination thereof, as described in further detail hereinabove.

By clicking one of the buttons 421-423, the driver triggers the sending of a message bearing the fixed text shown on the clicked button, to the system 1000 (say to the message receiver), as described in further detail hereinabove.

Optionally, if clicked before a messaging channel is established between the vehicle computer of the first driver's vehicle and any other vehicle computer and is active, the fixed message is also taken by the system 1000 as a request for establishing a messaging channel, as described in further detail hereinabove.

Thus, in one example, the first driver clicks the button 422 that triggers the sending of a fixed message that bears a "Turn on your lights!!" text to the second driver's ("Tiger") vehicle computer.

When received by the system 1000, the "Turn on your lights!!" text message is taken by the system 1000 as a request of a type that requires immediate attention of a driver of a vehicle that is installed with a vehicle computer that has a detected spatiotemporal match with the first driver's vehicle computer, as described in further detail hereinabove.

Accordingly, the system 1000 (say the channel establisher 113) attempts to establish a messaging channel between the first driver's ("Sam") vehicle computer and a vehicle computer installed on a vehicle of the second driver ("Tiger"), provided the two vehicles are detected to have a spatiotemporal match, as described in further detail hereinabove.

When the second driver ("Tiger") is connected in the messaging channel, the first driver's "Turn on your lights!!" text message is sent to the vehicle computer of the second driver (i.e. to the vehicle driven by "Tiger").

A third part 430 of the exemplary GUI is an interface that presents an incoming textual message 431 to a first driver and allows the first driver to react to the incoming message, say by clicking on one of two or more alternative buttons 432-433.

Thus, in one example, the incoming message bears a "Can we talk?" text that is sent by a second driver to the first driver about an hour after the occurrence of a detected spatiotemporal match between the drivers' vehicle computers.

In the example, the interface 430 further allows the first driver to react to the incoming message 431, by connecting with a vehicle computer of the sender of the incoming message, in a messaging channel established by the system 1000, say by clicking a button 432 that triggers a phone call to the incoming message's sender.

Optionally, if the driver clicks the button 432, for connecting with the sender, the driver and the sender are allowed to communicate freely, say using a messaging application that allows both the sender and the driver, to communicate with open text messages (i.e. with messages that are not limited to a specific set of fixed text messages), as known in the art.

The interface 430 further allows the first driver to react to the incoming message 431, by refusing to connect with the sender's vehicle computer, say by clicking a button 433 that triggers a sending of a reply message bearing a "No, thanks!! text, which message is forwarded by the system 1000 (say the channel establisher 113) to the sender. Then, the system 1000 (say the channel establisher 113) closes the messaging channel between the two drivers.

Thus, potentially, with exemplary embodiments of the present invention, common ways of communication between drivers of vehicles that are in proximity, which ways have limited effectiveness, and may also disturb and/or risk other drivers, are replaced with a communication channel that is established automatically between the drivers, even when vehicles are no longer in proximity.

On the other hand, the exemplary embodiments may prevent communication abuse, and unsolicited messages from strangers, say by restricting the communication to a predefined list of fixed messages, and to drivers that agree to communicate with each other, as described in further detail hereinbelow.

It is expected that during the life of this patent many relevant devices and systems will be developed and the scope of the terms herein, particularly of the terms "Computer", "Vehicle", "Computer Processor", "Memory", "Micro SD", "CD-ROM", "USB-Memory", "HDD", "SSD", "ROM", "DRAM", "DRAM", "SRAM", "Camera", "GPS", "GNPSS", and "Galileo", is intended to include all such new technologies *a priori.*

It is appreciated that certain features of the invention, which are, for clarity, described in the context of separate embodiments, may also be provided in combination in a single embodiment. Conversely, various features of the invention, which are, for brevity, described in the context of a single embodiment, may also be provided separately or in any suitable sub-combination.

Although the invention has been described in conjunction with specific embodiments thereof, it is evident that many alternatives, modifications and variations will be apparent to those skilled in the art. Accordingly, it is intended to embrace all such alternatives, modifications and variations that fall within the scope of the appended claims.

## Claims

1. A method of vehicle-to-vehicle messaging, the method comprising using a server computer, for:
receiving (210) sensor data from a plurality of vehicle computers of respective vehicles being driven, and collecting the received sensor data;
detecting (220) a spatiotemporal match between at least two of the vehicle computers, using the collected sensor data; and
trying to establish a messaging channel (230) between at least two of the vehicle computers having the detected spatiotemporal match, and being **characterised by** comprising: upon failing to establish the messaging channel, conducting one of:
- trying to establish a messaging channel between a secondary computing device predefined for a first one of the vehicle computers having the detected spatiotemporal match and a second one of the vehicle computers having the detected spatiotemporal match,
- trying to establish a messaging channel between a secondary computing device predefined for a driver of a vehicle installed with a first one of the vehicle computers having the detected spatiotemporal match, and a second one of the vehicle computers having the detected spatiotemporal match,
- trying to establish a messaging channel between respective secondary computing devices predefined for the vehicle computers having the detected spatiotemporal match, and
- trying to establish a messaging channel between respective secondary computing devices predefined for drivers of the vehicles installed with the vehicle computers having the detected spatiotemporal match.

2. The method of claim 1, further comprising receiving from each respective one of at least two of the vehicle computers having the detected spatiotemporal match, a request message indicating a request to establish the messaging channel and conditioning the establishment of the messaging channel upon said receiving.

3. The method of any preceding claim, further comprising receiving from at least one of the vehicle computers having the detected spatiotemporal match, a request message indicating a request to establish the messaging channel and conditioning the establishment of the messaging channel upon said receiving.

4. The method of any preceding claim, further comprising receiving from at least one of the plurality of vehicle computers, data characterizing a driver of the vehicle that is installed with the vehicle computer, and conditioning said establishing of the messaging channel upon the received data characterizing the driver.

5. The method of any preceding claim, wherein said detected spatiotemporal match pertains to a point in time that is of a predefined period of time before said establishing.

6. The method of any preceding claim, further comprising receiving dead reckoning data from at least one of the vehicle computers and using the received dead reckoning data for detecting the spatiotemporal match.

7. The method of any preceding claim, wherein the received sensor data comprises at least one of location data, GPS data and image data, and wherein the method further comprising at least one of:
- deriving location data from image data comprised in the received sensor data,
- deriving vehicle type data from image data comprised in the received sensor data, and
- deriving vehicle identification data from image data comprised in the received sensor data.

8. The method of any preceding claim, further comprising receiving data from a driver of a vehicle that the vehicle computer is installed in, and conditioning the establishing of the messaging channel upon the data received from the driver.

9. The method of any preceding claim, further comprising at least one of:
- limiting communication over the messaging channel to a set of predefined fixed messages, and
- establishing the messaging channel between only two of the vehicle computers having the spatiotemporal match.

10. The method of any preceding claim, further comprising receiving a request message from one of the vehicle computers, selecting a set of predefined fixed messages based on a type of the request message received from the vehicle computer, and limiting communication over the messaging channel to the selected set.

11. A system (1000) for vehicle-to-vehicle messaging, the system implemented on a server computer and comprising:
a processing circuitry (101); and
a memory (102) in communication with said processing circuitry, the memory (102) containing instructions that, when executed by the processing circuitry, cause the system to:
receive sensor data from a plurality of vehicle computers of respective vehicles being driven, and collect the received sensor data;
detect a spatiotemporal match between at least two of the vehicle computers, using the collected sensor data; and
try to establish a messaging channel between at least two of the vehicle computers having the detected spatiotemporal match, and being **characterised by** upon failing to establish the messaging channel, cause the system to conduct one of:
- trying to establish a messaging channel between a secondary computing device predefined for a first one of the vehicle computers having the detected spatiotemporal match and a second one of the vehicle computers having the detected spatiotemporal match,
- trying to establish a messaging channel between a secondary computing device predefined for a driver of a vehicle installed with a first one of the vehicle computers having the detected spatiotemporal match, and a second one of the vehicle computers having the detected spatiotemporal match,
- trying to establish a messaging channel between respective secondary computing devices predefined for the vehicle computers having the detected spatiotemporal match, and
- trying to establish a messaging channel between respective secondary computing devices predefined for drivers of the vehicles installed with the vehicle computers having the detected spatiotemporal match.

12. The system of claim 11, wherein when executed by the processing circuitry, the instructions further cause the system to conduct at least one of:
- receive from each respective one of at least two of the vehicle computers having the detected spatiotemporal match, a request message indicating a request to establish the messaging channel, and
- receive from at least one of the plurality of vehicle computers, data characterizing a driver of the vehicle that is installed with the vehicle computer, and condition said establishing of the connection upon the received data characterizing the driver.

13. The system of any of claims 11 to 12, wherein when executed by the processing circuitry, the instructions further cause the system to at least one of:
- receive a request message from one of the vehicle computers, select a set of predefined fixed messages based on a type of the request message received from the vehicle computer, and limit communication over the messaging channel to the selected set,
- establish the messaging channel between only two of the vehicle computers having the spatiotemporal match, and
- receive dead reckoning data from at least one of the vehicle computers, and use the received dead reckoning data for detecting the spatiotemporal match.

## Patentansprüche

1. Verfahren zur Fahrzeug-zu-Fahrzeug-Kommunikation, wobei das Verfahren die Verwendung eines Servercomputers umfasst, um:
Sensordaten von einer Vielzahl von Fahrzeugcomputern der jeweiligen gefahrenen Fahrzeuge zu empfangen (210) und die empfangenen Sensordaten zu sammeln;
eine räumlich-zeitliche Übereinstimmung zwischen mindestens zwei der Fahrzeugcomputer unter Verwendung der gesammelten Sensordaten zu detektieren (220); und
zu versuchen, einen Nachrichtenkanal (230) zwischen mindestens zwei der Fahrzeugcomputer mit der detektierten räumlich-zeitlichen Übereinstimmung einzurichten, und **dadurch gekennzeichnet, dass** es umfasst: bei einem Fehlschlagen des Einrichtens des Nachrichtenkanals Durchführung einer der folgenden Maßnahmen:
Versuch, einen Nachrichtenkanal zwischen einer sekundären Rechenvorrichtung, die für einen ersten der Fahrzeugcomputer mit der detektierten räumlich-zeitlichen Übereinstimmung vordefiniert ist, und einem zweiten der Fahrzeugcomputer mit der detektierten räumlich-zeitlichen Übereinstimmung einzurichten,
Versuch, einen Nachrichtenkanal zwischen einer sekundären Rechenvorrichtung, die für einen Fahrer eines Fahrzeugs, in dem ein erster der Fahrzeugcomputer mit der detektierten räumlich-zeitlichen Übereinstimmung installiert ist, vordefiniert ist, und einem zweiten der Fahrzeugcomputer mit der detektierten räumlich-zeitlichen Übereinstimmung einzurichten,
Versuch, einen Nachrichtenkanal zwischen jeweiligen sekundären Rechenvorrichtungen, die für die Fahrzeugcomputer mit der detektierten räumlich-zeitlichen Übereinstimmung vordefiniert sind, einzurichten, und
Versuch, einen Nachrichtenkanal zwischen jeweiligen sekundären Rechenvorrichtungen, die für Fahrer der Fahrzeuge, in denen die Fahrzeugcomputer mit der detektierten räumlich-zeitlichen Übereinstimmung installiert sind, vordefiniert sind, einzurichten.

2. Verfahren nach Anspruch 1, das ferner umfasst: Empfangen einer Anforderungsnachricht von jedem jeweiligen von mindestens zwei der Fahrzeugcomputer mit der detektierten räumlich-zeitlichen Übereinstimmung, die eine Anforderung zum Einrichten des Nachrichtenkanals anzeigt, und Bedingen des Einrichtens des Nachrichtenkanals nach dem besagten Empfangen.

3. Verfahren nach einem der vorstehenden Ansprüche, das ferner umfasst: Empfangen einer Anforderungsnachricht von mindestens einem der Fahrzeugcomputer mit der detektierten räumlich-zeitlichen Übereinstimmung, die eine Anforderung zum Einrichten des Nachrichtenkanals angibt, und Bedingen des Einrichtens des Nachrichtenkanals nach dem besagten Empfangen.

4. Verfahren nach einem der vorstehenden Ansprüche, das ferner umfasst: Empfangen von Daten, die einen Fahrer des Fahrzeugs charakterisieren, in dem der Fahrzeugcomputer installiert ist, von mindestens einem der Vielzahl von Fahrzeugcomputern und Bedingen des besagten Einrichtens des Nachrichtenkanals von den empfangenen Daten, die den Fahrer charakterisieren.

5. Verfahren nach einem der vorstehenden Ansprüche, wobei sich die besagte detektierte räumlich-zeitliche Übereinstimmung auf einen Zeitpunkt bezieht, der in einem vordefinierten Zeitraum vor dem besagten Einrichten liegt.

6. Verfahren nach einem der vorstehenden Ansprüche, das ferner umfasst: Empfangen von Koppelnavigationsdaten von mindestens einem der Fahrzeugcomputer und Verwenden der empfangenen Koppelnavigationsdaten zum Detektieren der räumlich-zeitlichen Übereinstimmung.

7. Verfahren nach einem der vorangehenden Ansprüche, wobei die empfangenen Sensordaten mindestens eines von Standortdaten, GPS-Daten und Bilddaten umfassen und wobei das Verfahren ferner mindestens eines der folgenden umfasst:
Ableiten von Standortdaten aus Bilddaten, die in den empfangenen Sensordaten enthalten sind,
Ableiten von Fahrzeugtypdaten aus Bilddaten, die in den empfangenen Sensordaten enthalten sind, und
Ableiten von Fahrzeugidentifikationsdaten aus Bilddaten, die in den empfangenen Sensordaten enthalten sind.

8. Verfahren nach einem der vorstehenden Ansprüche, das ferner umfasst: Empfangen von Daten von einem Fahrer eines Fahrzeugs, in dem der Fahrzeugcomputer installiert ist, und Bedingen des Einrichtens des Nachrichtenkanals von den vom Fahrer empfangenen Daten.

9. Verfahren nach einem der vorstehenden Ansprüche, das ferner mindestens eines der folgenden umfasst:
Beschränken der Kommunikation über den Nachrichtenkanal auf einen Satz vordefinierter fester Nachrichten, und
Einrichten des Nachrichtenkanals nur zwischen zwei der Fahrzeugcomputer, die die räumlich-zeitliche Übereinstimmung aufweisen.

10. Verfahren nach einem der vorstehenden Ansprüche, das ferner umfasst: Empfangen einer Anforderungsnachricht von einem der Fahrzeugcomputer, Auswählen eines Satzes vordefinierter fester Nachrichten basierend auf einem Typ der vom Fahrzeugcomputer empfangenen Anforderungsnachricht und Beschränken der Kommunikation über den Nachrichtenkanal auf den ausgewählten Satz.

11. System (1000) für Fahrzeug-zu-Fahrzeug-Kommunikation, wobei das System auf einem Servercomputer implementiert ist und umfassend:
eine Verarbeitungsschaltung (101); und
einen Speicher (102), der mit der besagten Verarbeitungsschaltung in Verbindung steht, wobei der Speicher (102) Befehle enthält, die, wenn sie von der Verarbeitungsschaltung ausgeführt werden, das System veranlassen:
Sensordaten von einer Vielzahl von Fahrzeugcomputern der jeweiligen gefahrenen Fahrzeuge zu empfangen und die empfangenen Sensordaten zu sammeln;
eine räumlich-zeitliche Übereinstimmung zwischen mindestens zwei der Fahrzeugcomputer unter Verwendung der gesammelten Sensordaten zu detektieren; und
zu versuchen, einen Nachrichtenkanal zwischen mindestens zwei der Fahrzeugcomputer mit der detektierten räumlich-zeitlichen Übereinstimmung einzurichten, und **dadurch gekennzeichnet, dass** bei einem Fehlschlagen des Einrichtens des Nachrichtenkanals das System veranlasst wird, eine der folgenden Aktionen durchzuführen:
Versuch, einen Nachrichtenkanal zwischen einer sekundären Rechenvorrichtung, die für einen ersten der Fahrzeugcomputer mit der detektierten räumlich-zeitlichen Übereinstimmung vordefiniert ist, und einem zweiten der Fahrzeugcomputer mit der detektierten räumlich-zeitlichen Übereinstimmung einzurichten, Versuch, einen Nachrichtenkanal zwischen einer sekundären Rechenvorrichtung, die für einen Fahrer eines Fahrzeugs, in dem ein erster der Fahrzeugcomputer mit der detektierten räumlich-zeitlichen Übereinstimmung installiert ist, vordefiniert ist, und einem zweiten der Fahrzeugcomputer mit der detektierten räumlich-zeitlichen Übereinstimmung einzurichten,
Versuch, einen Nachrichtenkanal zwischen jeweiligen sekundären Rechenvorrichtungen, die für die Fahrzeugcomputer mit der detektierten räumlich-zeitlichen Übereinstimmung vordefiniert sind, einzurichten, und
Versuch, einen Nachrichtenkanal zwischen jeweiligen sekundären Rechenvorrichtungen, die für Fahrer der Fahrzeuge, in denen die Fahrzeugcomputer mit der detektierten räumlich-zeitlichen Übereinstimmung installiert sind, vordefiniert sind, einzurichten.

12. System nach Anspruch 11, wobei, wenn sie von der Verarbeitungsschaltung ausgeführt werden, die Befehle das System ferner veranlassen, mindestens eine der folgenden Aktionen durchzuführen:
Empfangen einer Anforderungsnachricht von jedem jeweiligen von mindestens zwei der Fahrzeugcomputer mit der detektierten räumlich-zeitlichen Übereinstimmung, die eine Anforderung zum Einrichten des Nachrichtenkanals angibt, und
Empfangen von Daten, die einen Fahrer des Fahrzeugs charakterisieren, in dem der Fahrzeugcomputer installiert ist, von mindestens einem der Vielzahl von Fahrzeugcomputern und Bedingen des besagten Einrichtens der Verbindung von den empfangenen Daten, die den Fahrer charakterisieren.

13. System nach einem der Ansprüche 11 bis 12, wobei, wenn sie von der Verarbeitungsschaltung ausgeführt werden, die Befehle das System ferner veranlassen, mindestens eine der folgenden Aktionen durchzuführen:
Empfangen einer Anforderungsnachricht von einem der Fahrzeugcomputer, Auswählen eines Satzes vordefinierter fester Nachrichten basierend auf einem Typ der vom Fahrzeugcomputer empfangenen Anforderungsnachricht und Beschränken der Kommunikation über den Nachrichtenkanal auf den ausgewählten Satz,
Einrichten des Nachrichtenkanals nur zwischen zwei der Fahrzeugcomputer, die die räumlich-zeitliche Übereinstimmung aufweisen, und
Empfangen von Koppelnavigationsdaten von mindestens einem der Fahrzeugcomputer und Verwenden der empfangenen Koppelnavigationsdaten zum Detektieren der räumlich-zeitlichen Übereinstimmung.

## Revendications

1. Procédé de messagerie de véhicule à véhicule, le procédé comprenant l'utilisation d'un ordinateur serveur, pour :
la réception (210) de données de capteurs à partir d'une pluralité d'ordinateurs de bord de véhicules respectifs étant conduits, et la collecte des données de capteurs reçues ;
la détection (220) d'une correspondance spatio-temporelle entre au moins deux des ordinateurs de bord, à l'aide des données de capteurs collectées ; et
la tentative d'établissement d'un canal de messagerie (230) entre au moins deux des ordinateurs de bord ayant la correspondance spatio-temporelle détectée, et étant **caractérisé par** le fait de comprendre : en cas d'échec de l'établissement du canal de messagerie, l'exécution de l'une des actions suivantes :
la tentative d'établissement d'un canal de messagerie entre un dispositif informatique secondaire prédéfini pour un premier des ordinateurs de bord ayant la correspondance spatio-temporelle détectée et un second des ordinateurs de bord ayant la correspondance spatio-temporelle détectée,
la tentative d'établissement d'un canal de messagerie entre un dispositif informatique secondaire prédéfini pour un conducteur d'un véhicule équipé d'un premier des ordinateurs de bord ayant la correspondance spatio-temporelle détectée, et un second des ordinateurs de bord ayant la correspondance spatio-temporelle détectée,
la tentative d'établissement d'un canal de messagerie entre des dispositifs informatiques secondaires respectifs prédéfinis pour les ordinateurs de bord ayant la correspondance spatio-temporelle détectée, et
la tentative d'établissement d'un canal de messagerie entre des dispositifs informatiques secondaires respectifs prédéfinis pour les conducteurs des véhicules équipés des ordinateurs de bord ayant la correspondance spatio-temporelle détectée.

2. Procédé selon la revendication 1, comprenant également la réception à partir de chacun des au moins deux ordinateurs de bord ayant la correspondance spatio-temporelle détectée, d'un message de demande indiquant une demande d'établir le canal de messagerie et conditionnant l'établissement du canal de messagerie à ladite réception.

3. Procédé selon une quelconque revendication précédente, comprenant également la réception à partir d'au moins l'un des ordinateurs de bord ayant la correspondance spatio-temporelle détectée, d'un message de demande indiquant une demande d'établir le canal de messagerie et conditionnant l'établissement du canal de messagerie à ladite réception.

4. Procédé selon une quelconque revendication précédente, comprenant également la réception à partir d'au moins l'un de la pluralité d'ordinateurs de bord, de données caractérisant un conducteur du véhicule qui est équipé de l'ordinateur de bord, et la condition dudit établissement du canal de messagerie aux données reçues caractérisant le conducteur.

5. Procédé selon une quelconque revendication précédente, dans lequel ladite correspondance spatio-temporelle détectée se rapporte à un point dans le temps qui est d'une période de temps prédéfinie avant ledit établissement.

6. Procédé selon une quelconque revendication précédente, comprenant également la réception de données de navigation à l'estime à partir d'au moins l'un des ordinateurs de bord et l'utilisation des données de navigation à l'estime reçues pour détecter la correspondance spatio-temporelle.

7. Procédé selon une quelconque revendication précédente, dans lequel les données de capteurs reçues comprennent au moins l'une de données de localisation, de données GPS et de données d'image, et dans lequel le procédé comprend également au moins l'une :
de l'extraction de données de localisation à partir de données d'image comprises dans les données de capteurs reçues,
de l'extraction de données de type de véhicule à partir de données d'image comprises dans les données de capteurs reçues, et
de l'extraction de données d'identification de véhicule à partir de données d'image comprises dans les données de capteurs reçues.

8. Procédé selon une quelconque revendication précédente, comprenant également la réception de données à partir d'un conducteur d'un véhicule sur lequel l'ordinateur de bord est installé, et la condition d'établissement du canal de messagerie sur les données reçues à partir du conducteur.

9. Procédé selon une quelconque revendication précédente, comprenant également au moins l'un :
de la limitation de la communication sur le canal de messagerie à un ensemble de messages fixes prédéfinis, et
de l'établissement du canal de messagerie entre seulement deux des ordinateurs de bord ayant la correspondance spatio-temporelle.

10. Procédé selon une quelconque revendication précédente, comprenant également la réception d'un message de demande à partir de l'un des ordinateurs de bord, la sélection d'un ensemble de messages fixes prédéfinis sur la base d'un type de message de demande reçu à partir de l'ordinateur de bord, et la limitation de la communication sur le canal de messagerie à l'ensemble sélectionné.

11. Système (1000) de messagerie de véhicule à véhicule, le système étant mis en œuvre sur un ordinateur serveur et comprenant :
un circuit de traitement (101) ; et
une mémoire (102) en communication avec ledit circuit de traitement, la mémoire (102) contenant des instructions qui, lorsqu'elles sont exécutées par le circuit de traitement, amènent le système à :
recevoir des données de capteurs à partir d'une pluralité d'ordinateurs de bord de véhicules respectifs étant conduits, et collecter les données de capteurs reçues ;
détecter une correspondance spatio-temporelle entre au moins deux des ordinateurs de bord, à l'aide des données de capteurs collectées ; et
tenter d'établir un canal de messagerie entre au moins deux des ordinateurs de bord ayant la correspondance spatio-temporelle détectée, et étant **caractérisée par le fait qu'**en cas d'échec de l'établissement du canal de messagerie, amènent le système à réaliser l'une des actions suivantes :
la tentative d'établissement d'un canal de messagerie entre un dispositif informatique secondaire prédéfini pour un premier des ordinateurs de bord ayant la correspondance spatio-temporelle détectée et un second des ordinateurs de bord ayant la correspondance spatio-temporelle détectée,
la tentative d'établissement d'un canal de messagerie entre un dispositif informatique secondaire prédéfini pour un conducteur d'un véhicule équipé d'un premier des ordinateurs de bord ayant la correspondance spatio-temporelle détectée, et un second des ordinateurs de bord ayant la correspondance spatio-temporelle détectée,
la tentative d'établissement d'un canal de messagerie entre des dispositifs informatiques secondaires respectifs prédéfinis pour les ordinateurs de bord ayant la correspondance spatio-temporelle détectée, et
la tentative d'établissement d'un canal de messagerie entre des dispositifs informatiques secondaires respectifs prédéfinis pour les conducteurs des véhicules équipés des ordinateurs de bord ayant la correspondance spatio-temporelle détectée.

12. Système selon la revendication 11, dans lequel lorsqu'elles sont exécutées par le circuit de traitement, les instructions amènent également le système à réaliser au moins l'une des actions suivantes :
la réception à partir de chacun des au moins deux ordinateurs de bord ayant la correspondance spatio-temporelle détectée, d'un message de demande indiquant une demande d'établir le canal de messagerie, et
la réception à partir d'au moins l'un de la pluralité d'ordinateurs de bord, de données caractérisant un conducteur du véhicule qui est équipé de l'ordinateur de bord, et la condition dudit établissement de la connexion aux données reçues caractérisant le conducteur.

13. Système selon l'une quelconque des revendications 11 à 12, dans lequel lorsqu'elles sont exécutées par le circuit de traitement, les instructions amènent également le système à au moins l'une des actions suivantes :
la réception d'un message de demande à partir de l'un des ordinateurs de bord, la sélection d'un ensemble de messages fixes prédéfinis sur la base d'un type du message de demande reçu à partir de l'ordinateur de bord, et la limitation de la communication sur le canal de messagerie à l'ensemble sélectionné,
l'établissement du canal de messagerie entre seulement deux des ordinateurs de bord ayant la correspondance spatio-temporelle, et
la réception de données de navigation à l'estime à partir d'au moins l'un des ordinateurs de bord, et l'utilisation des données de navigation à l'estime reçues pour détecter la correspondance spatio-temporelle.
